# EUROPEAN PATENT APPLICATION

(11) **EP 2 037 382 A1**
(43) Date of publication of application: **18.03.2009**
(21) Application number: 08252927.2
(22) Date of filing: 03.09.2008
(51) Int. Cl.: G06F 17/30, G06N 3/12

(54) **Data processing apparatus for graph matching based on an evolutionary algorithm**

(30) Priority: 04.09.2007 GB 0717183
(71) Applicant: Thales Holdings UK Plc, Addlestone, Near Weybridge, Surrey KT15 2NX (GB)
(72) Inventor: Watson, Doug, Reading, Berkshire RG2 0SB (GB); Ash, Chris, Reading, Berkshire RG2 0SB (GB)
(74) Representative: Round, Edward Mark

(57) **Abstract**

An evolutionary algorithm is implemented to process data queries in such a way that a response, or a collection of possibly suitable responses, can be returned to the user. The implementation involves data processing on a population initially selected from the database as possible responses, and application of genetic mutation techniques to refine said population in view of an objective function.

## Description

The invention relates to the processing and retention of items of data, with relationships between the items of data.

It is desirable in many fields of technology and commerce, to be able to identify relationships between items of data held in a database. For this, relational databases have been used for some considerable time, to hold information in such a way that data items can be related with each other. A relational database can be considered as a computerised implementation of a graph, with nodes and vertices. As more information about a particular item (or node) in the database becomes available, new nodes can be added. As relationships between existing items of data become available, new vertices between nodes can be added.

Once a database has been formed, use of the database may be through queries. A user may wish to find a piece of data which matches certain criteria. For instance, in a commercial record, a user may wish to identify all customers of a particular store who habitually buy a particular brand of product. As an alternative example, a query might seek identification, in a database of scientific observations, of all species with a particular set of characteristics.

Queries can be sophisticated and can give rise to substantial processing burden. Moreover, until now, suitable searching tools have not been available to process information held in such a database, to enable provision of responses to queries. Some tools have been available, such as an implementation of an algorithm to identify the shortest path between two nodes in a graph. However, additional database query tools would be desirable.

An aspect of the invention provides a method of selecting data from a database, the database storing items of data and connections between said items of data, the method of selecting being operable to seek a match or a close fit between a query and items in said database, such a query comprising a plurality of query data items and relationships between said query data items, defining an initial set of candidate responses to said query, each candidate response comprising said data items in said query and data items in said database with a relationship established in said database with said query data items, and performing an evolutionary algorithm on a population whose members are initially said initial set of candidate responses and thereafter are defined as a set iteratively evolved therefrom until a fitness criterion is reached.

The evolutionary algorithm may include mutating members of said population.

The mutating may comprise, for each member so mutated, selecting a first data item in said member, identifying a second data item in said member with which, in said member, said first data item has a relationship, further identifying in said database a third data item with which, in said database, said first data item has a relationship and, in said member, replacing said second item by said third item. Said mutating may be performed on a randomly selected subset of members of said population.

The evolutionary algorithm may include performing crossover operations between members of said population. Performing a crossover operation may comprise identifying two members of said population having an instance of a data item in common, for each of said identified two members, identifying further sequences of data items and relationships commenced by said data item in common, and swapping said identified sequences between said identified members.

The evolutionary algorithm may include, on each iteration thereof, performing a fitness test on each member of said population and forming a next iteration of said population on the basis of members that pass said test.

Another aspect of the invention comprises a computer program product operable, when executed on a computer, to cause said computer to perform a method in accordance with any preceding claim. The product may itself be implemented as a storage medium, such as a magnetic or optical disk, or a memory device, or a hardware implementation such as an ASIC, FPGA or the like.

Another aspect of the invention provides data processing apparatus storing a database storing items of data and connections between said items of data and comprising user query processing means, said user query processing means being operable to seek a match or a close fit between a query and items in said database, such a query comprising a plurality of query data items and relationships between said query data items, said user query processing means comprising initial candidate population defining means operable to define an initial set of candidate responses to said query, each candidate response comprising said data items in said query and data items in said database with a relationship established in said database with said query data items, and query response evolving means operable to apply an evolutionary data processing algorithm on a population whose members are initially said initial set of candidate responses and thereafter are defined as a set iteratively evolved therefrom until a fitness criterion is reached.

Another aspect of the invention implements the use of a genetic algorithm to attempt to identify a sub-graph from a graph. Of course, the reader will understand that this aspect of the invention can be employed to attempt to identify a multiple of sub-graphs in the graph. The structure of the sub-graph is specified by some user interested in extracting relevant information from the graph. The rationale for performing this is illustrated in the following example.

The example is provided as a specific embodiment of the invention and is not intended to imply any limitation on the possible range of use of the present invention. The specific embodiment is now described with reference to the accompanying drawings, in which:
Figure 1 illustrates a sub-graph representing a query to a database used in criminal investigations;
Figure 2A illustrates a graph stored in a database in accordance with an embodiment of the invention;
Figures 2B, 2C, and 2D illustrate sub-graphs used as initial members of a population of candidate responses to a query;
Figure 3 illustrates a member of the population to be subjected to mutation;
Figure 4 illustrates a mutation operation as performed on the sub-graph illustrated in figure 3;
Figure 5 illustrates a crossover operation as performed on sub-graphs of the example embodiment;
Figure 6 illustrates a computer configured as an implementation of the specific embodiment of the invention;
Figure 7 illustrates a flow diagram of the implementation of the specific embodiment of the invention; and
Figure 8 illustrates an example of two graphs that may be used in an objective function.

The example involves a database comprising a significant number of items of information, with corresponding interrelationships. The nature of the information is not relevant to the applicability of the embodiment of the invention, but could include scientific research observational data, commercial and marketing information, or indeed criminal investigative information. The information is, in this embodiment, stored in a graph.

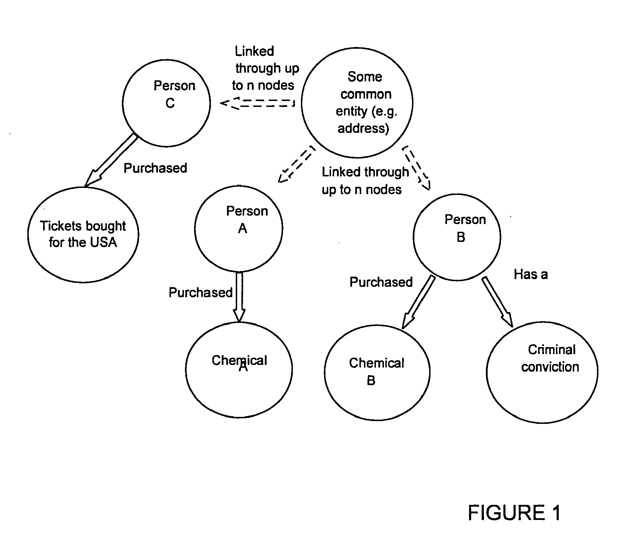

The embodiment takes account of the fact that the extent of the information (arranged as a graph stored in memory of the computer) is too large to allow a human operator to efficiently search and identify information exhibiting a relationship of interest. Moreover, a simple replication of a human searcher's search strategy is an inefficient use of a computer's resources. The present embodiment provides a method for asking questions in a form which allows a subset of relevant information to be found. The computer is configured to receive a query in the form of a sub-graph. In general terms, the computer then processes the information defining that sub-graph by making use of a genetic algorithm, in an attempt to find one or more instances of the sub-graph within the information stored in the computer describing the full graph. Figure 1 illustrates an example of a sub-graph defining such a query.

In this example, the operator is interested in finding people who buy chemicals that when combined could potentially be used to make a bomb. The operator provides a query, by suitable user input, to the computer storing the database defining a graph of information relating to criminal investigative intelligence. The query in this case seeks to identify instances of two people who live at the same address and have purchased respective chemical components which could be used in combination to manufacture an explosive device. The query also specifies that one of the two people is otherwise qualified by additional information, such as the possession of a criminal record, or the recent purchase of a ticket for a flight to another country. In figure 1, this is illustrated as dotted arrows and the common entity is up to n nodes away. This means that the query will allow there to be up to n nodes all linked together between Person A and the common entity.

This query can be considered as a template for the type of information that is to be extracted from the graph of available information. The person making the query is not only interested in particular chemicals, but is also interested in particular relationships between the chemicals and the other information stored in the graph. In traditional databases, information can be extracted using an SQL query. However, SQL cannot be used to extract data based on its structure, as illustrated in the example shown in figure 1. Extracting information based on content and structure results in the retrieval of more relevant information and less irrelevant information. By extracting less irrelevant information than using other techniques, the user is excused the task of investigating and discarding such irrelevant information.

The advantage of the approach presented in the previous example is that it is easy for both a human and machine to understand the type of question being asked. Accordingly, the interface between the user and the computer is improved.

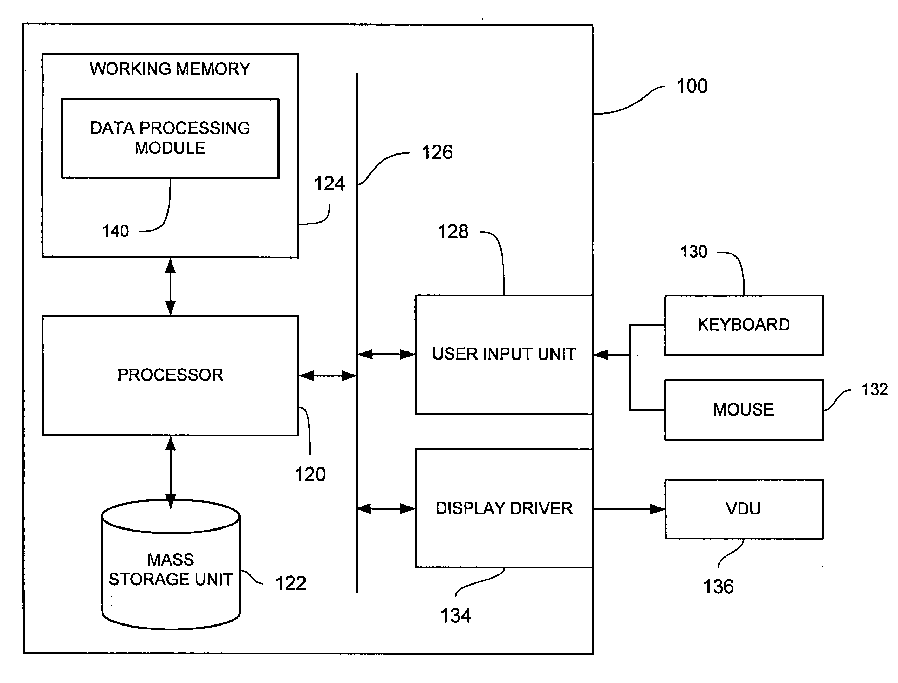

Figure 6 illustrates a computer 100 configured in accordance with this embodiment of the invention. The computer 100 comprises a processor 120 with a mass storage unit 122, in communication with working memory (for example RAM) 124, and further in communication with a bus 126. The bus provides access to a user input unit 128 which offers connectivity to a keyboard 130 and a mouse 132 for reception of user input actions. A display driver 134 converts data generated in the computer into an image signal sent to a visual display unit (VDU) 136.

In order to process the information input to the computer 100 in the graph based form, the computer 100 makes use of a data processing module 140 implementing a genetic algorithm. By this, the data processing module is able to search for the requested information posed in the graph based query.

The data processing module 140 is illustrated as being stored in the working memory 124 in figure 6. That is, it is represented as a computer program executed by the computer 100, although it will be appreciated that an alternative embodiment could be provided with more hardware implementation.

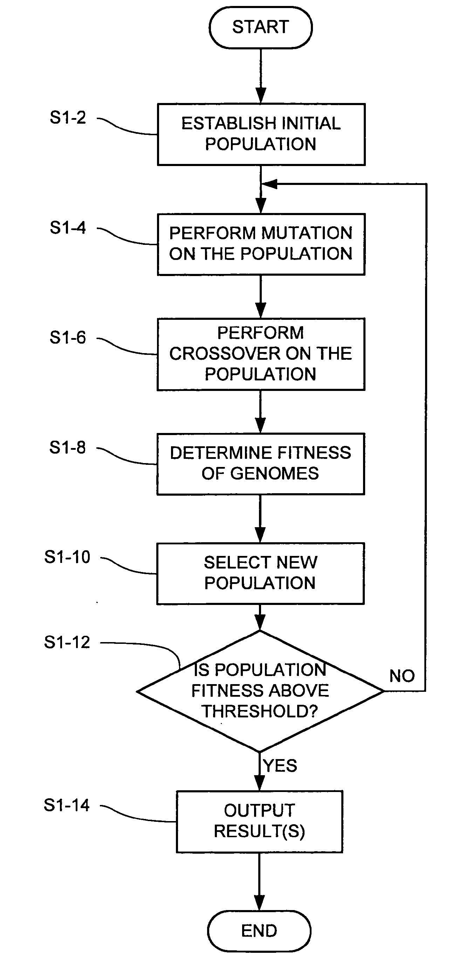

The following outlines implementation of the data processing module in accordance with the specific embodiment. The steps are described with reference to figure 7.

### Step 1: Establish initial population

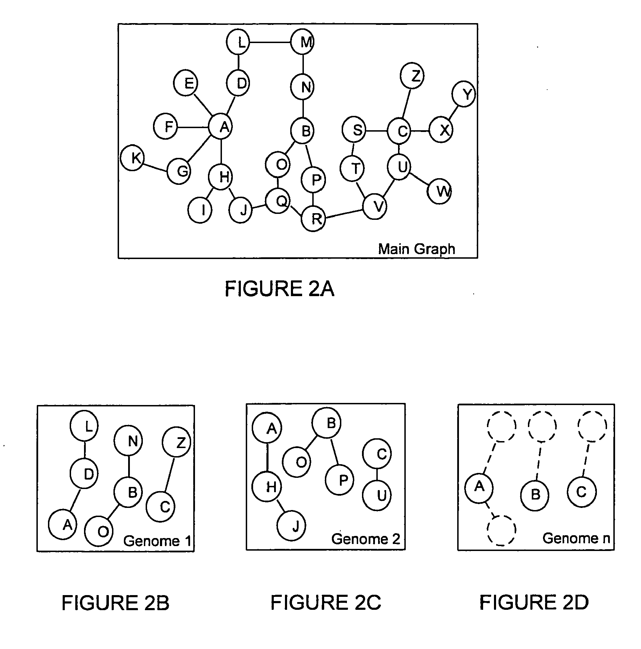

As illustrated as step S 1-2 in figure 7, an initial population for the genetic algorithm is established, using a tree structure. The information populating the tree structure is extracted from the main graph based on the query. For an example of how genomes can be initialised in accordance with this, reference is made to figure 2.

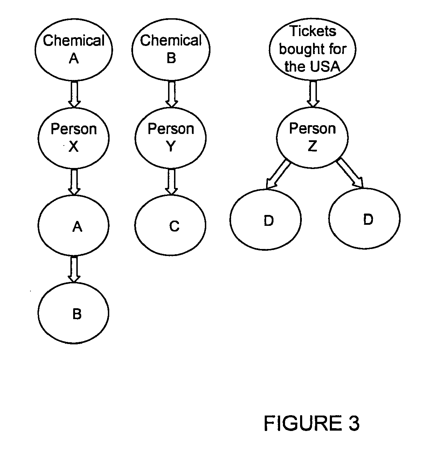

In the example shown in figure 2, nodes A, B and C are specified named nodes in the query. These nodes appear in each genome extracted from the main graph. If the query does not name certain nodes specifically, then the initial population is established by extracting nodes at random from the graph. For each genome, a random set of nodes that are connected to the named nodes are extracted from the main graph. The number of connected nodes depends on the query. Hence, applying this to the example shown in figure 1, one potential genome could look like that shown in figure 3.

The nodes named in the query provided by the operator are placed at the top of a tree hierarchy defined by the computer. Random nodes that are connected to these nodes are extracted from the main graph and added to the genome as illustrated in the example.

### Step 2: Perform mutation on the population

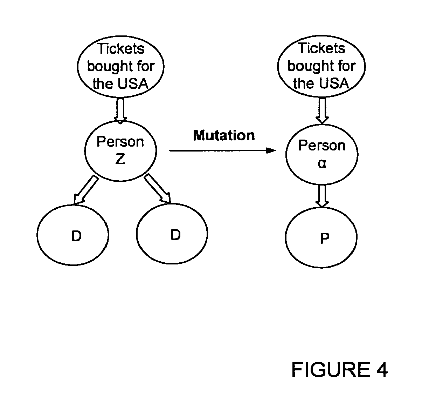

In this embodiment, this step (step S1-4) is implemented by removing a branch from a node and replacing it with a branch from the original graph. An example of this is shown in figure 4. The node "Tickets bought for the USA" is linked to the "Person Z" node in one of the genomes. Under the mutation operator, a random node that is also connected to the "Tickets bought for the USA" node in the main graph is used instead.

### Step 3: Perform crossover on the population

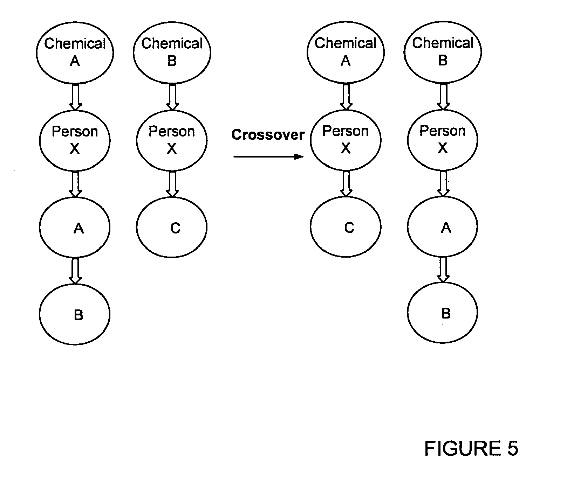

The crossover operation (step S1-6), mimicking the biological process, is then realised by finding two nodes that are the same in different genomes and swapping them over, as illustrated in the example shown in figure 5. In this example, the node "Person X" is common to the nodes "Chemical A" and Chemical B" and therefore the respective nodes in the two genomes are suitable for the application of the crossover operation.

### Step 4: Determine fitness of genomes

After the mutation and crossover operations have been performed on the population of genomes, the fitness of each member of the population created thereby is determined (S1-8). The fitness of each genome is determined by how closely it matches the query posed by the operator - i.e. how closely the genome matches the sub-graph defined by the operator. Based on an objective function, a new population is chosen (S1-10) for the next generation and the procedure is iterated from step 2 until the population fitness approaches some predetermined limit (S1-12).

An example of a suitable objective function will now be described. A query graph and a candidate solution are compared to determine similarity in respect of the number of nodes in each, and the number of vertices in each. The difference between the two graphs in these two respects is returned as a score. A relatively low score, and preferably a zero score, is desirable as this represents that the graphs are of the same order (i.e. the same number of nodes), are the same size (i.e. they have the same number of vertices), and their nodes have the same degree (i.e. the same number of vertices to other nodes.

It should be appreciated, however, that if the objective score is zero the two graphs might not be isomorphic. This is not problematic for the described embodiment as the embodiment seeks good approximate solutions rather than exactitude.

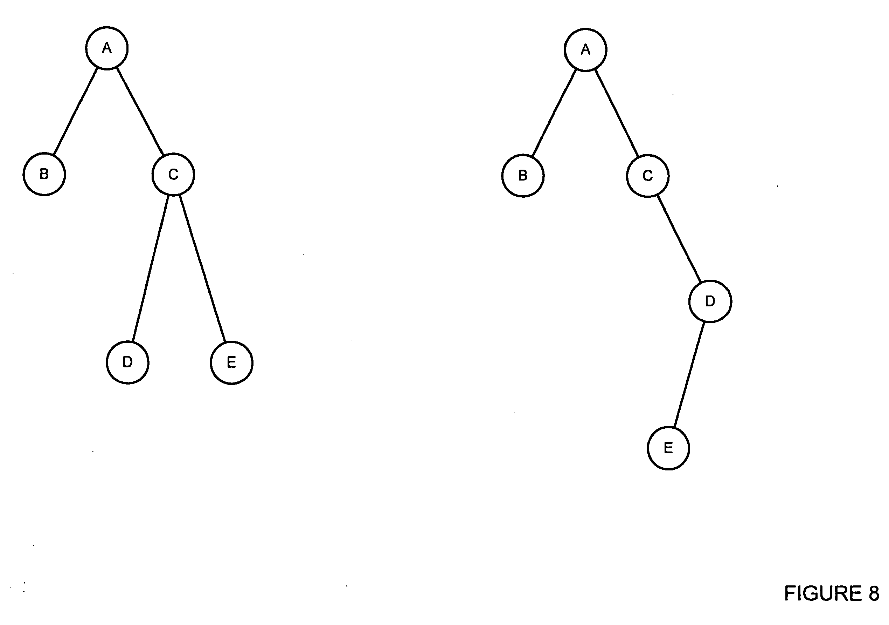

An example of application of this objective function, using the two graphs illustrated in figure 8, now follows. In figure 8, the left hand graph is a representation of a candidate query, while the right hand graph is a candidate solution.

Looking at the two graphs in respect of the questions of degree and size, both graphs are the same, having 5 nodes and 4 edges or vertices. However, differences arise in relation to the degree of each node. The following table sets out the degree of each node in the candidate query in descending order:

| node | C | A | B | D | E |
|---|---|---|---|---|---|
| degree | 3 | 2 | 1 | 1 | 1 |

Likewise, and in contrast, the degree for each node in the candidate solution is:

| node | A | C | D | B | E |
|---|---|---|---|---|---|
| degree | 2 | 2 | 2 | 1 | 1 |

Thus, the differences across the nodes are, by column above, 1+0+1+0+0=2. The objective score of the candidate solution is thus based on this difference.

Once the population has achieved a satisfactory level of fitness to the query, the population is output as a set of results (S1-14). This satisfactory level could be a score of zero, or another threshold could be set based on speed (and practicality) of search and computing resource.

It should be appreciated from the above, and is acknowledged, that the approach disclosed herein may not find the optimal sub-graph from the main graph. However, this may be advantageous, as it accommodates the possibility of non-specific queries, or queries for which there is no one absolute match. The computer implementing this Genetic algorithm would, in such circumstances, find solutions that closely match the query. This may be useful if the operator does not have all the information to specify a query accurately or some of the information supplied in the query is incorrect.

## Claims

1. A method of selecting data from a database, the database storing items of data and connections between said items of data, the method of selecting being operable to seek a match or a close fit between a query and items in said database, such a query comprising a plurality of query data items and relationships between said query data items, defining an initial set of candidate responses to said query, each candidate response comprising said data items in said query and data items in said database with a relationship established in said database with said query data items, and performing an evolutionary algorithm on a population whose members are initially said initial set of candidate responses and thereafter are defined as a set iteratively evolved therefrom until a fitness criterion is reached.

2. A method in accordance with claim 1 wherein the evolutionary algorithm includes mutating members of said population.

3. A method in accordance with claim 2 wherein said mutating comprises, for each member so mutated, selecting a first data item in said member, identifying a second data item in said member with which, in said member, said first data item has a relationship, further identifying in said database a third data item with which, in said database, said first data item has a relationship and, in said member, replacing said second item by said third item.

4. A method in accordance with claim 2 or claim 3 wherein said mutating is preceded by selecting at random a subset of members of said population on which said mutating is carried out.

5. A method in accordance with any preceding claim wherein the evolutionary algorithm includes performing crossover operations between members of said population.

6. A method in accordance with claim 5 wherein performing a crossover operation comprises identifying two members of said population having an instance of a data item in common, for each of said identified two members, identifying further sequences of data items and relationships commenced by said data item in common, and swapping said identified sequences between said identified members.

7. A method in accordance with claim 5 or claim 6 wherein said performing of a cross over operation is preceded by selecting at random a subset of members of said population on which said performing of a cross over operation is carried out.

8. A method in accordance with any preceding claim wherein said evolutionary algorithm includes, on each iteration thereof, performing a fitness test on each member of said population and forming a next iteration of said population on the basis of members that pass said test.

9. A method in accordance with claim 8 wherein said fitness test comprises comparing each member of said population with the query with regard to one or more objective measures and determining a fitness score on the basis of said one or more objective measures.

10. A method in accordance with claim 9 wherein said one or more objective measures includes one or more of the number of nodes in the member and the query, the number of vertices in the member and the query and the number of vertices associated with each node in the member and the query.

11. A method in accordance with claim 9 or claim 10 wherein said fitness test comprises determining which of said members of said population have a fitness score on a desired side of a threshold.

12. A method in accordance with claim 11 wherein a fitness score of zero is indicative of close similarity or identity between a candidate and a query, and wherein said threshold is greater than zero.

13. A computer program product operable, when executed on a computer, to cause said computer to perform a method in accordance with any preceding claim.

14. A computer readable storage device storing a computer program product in accordance with claim 8.

15. A computer receivable signal carrying a computer program product in accordance with claim 8.

16. Data processing apparatus storing a database storing items of data and connections between said items of data and comprising user query processing means, said user query processing means being operable to seek a match or a close fit between a query and items in said database, such a query comprising a plurality of query data items and relationships between said query data items, said user query processing means comprising initial candidate population defining means operable to define an initial set of candidate responses to said query, each candidate response comprising said data items in said query and data items in said database with a relationship established in said database with said query data items, and query response evolving means operable to apply an evolutionary data processing algorithm on a population whose members are initially said initial set of candidate responses and thereafter are defined as a set iteratively evolved therefrom until a fitness criterion is reached.

17. Apparatus in accordance with claim 16 wherein the query response evolving means comprises mutation means operable to mutate members of said population and said query response evolving means is operable to apply said mutation means to mutate members of said population as part of said evolutionary data processing algorithm.

18. Apparatus in accordance with claim 17 wherein said mutation means is operable, for each member so mutated, to select a first data item in said member, to identify a second data item in said member with which, in said member, said first data item has a relationship, further to identify in said database a third data item with which, in said database, said first data item has a relationship and, in said member, to replace said second item by said third item.

19. Apparatus in accordance with claim 17 or claim 18 and including random selection means operable, prior to application of said mutation means, to select at random a subset of members of said population on which said mutating is carried out.

20. Apparatus in accordance with any one of claims 16 to 19 wherein the query response evolving means comprises crossover means operable to perform crossover operations between members of said population and said query response evolving means is operable to apply said crossover means to perform crossover operations between members of said population as part of said evolutionary data processing algorithm.

21. Apparatus in accordance with claim 20 wherein said crossover means is operable to identify two members of said population having an instance of a data item in common, to identify, for each of said identified two members, further sequences of data items and relationships commenced by said data item in common, and to swap said identified sequences between said identified members.

22. Apparatus in accordance with claim 20 or claim 21 and including random selection means operable, prior to application of said crossover means, to select at random a subset of members of said population on which said crossover operation is to be carried out.

23. Apparatus in accordance with any one of claims 16 to 22 wherein the query response evolving means comprises fitness testing means operable to apply, on each iteration of the evolutionary data processing algorithm, a fitness test on each member of said population and forming a next iteration of said population on the basis of members that pass said test.

24. Apparatus in accordance with claim 23 wherein said fitness testing means is operable to compare each member of said population with the query with regard to one or more objective measures and to determine a fitness score on the basis of said one or more objective measures.

25. Apparatus in accordance with claim 24 wherein said one or more objective measures includes one or more of the number of nodes in the member and the query, the number of vertices in the member and the query and the number of vertices associated with each node in the member and the query.

26. Apparatus in accordance with claim 24 or claim 25 wherein said fitness testing means is operable to determine which of said members of said population have a fitness score on a desired side of a threshold.

27. Apparatus in accordance with claim 26 wherein a fitness score of zero is indicative of close similarity or identity between a candidate and a query, and wherein said threshold is greater than zero.
